# EUROPEAN PATENT APPLICATION

(11) **EP 1 780 237 A2**
(43) Date of publication of application: **02.05.2007**
(21) Application number: 06021196.8
(22) Date of filing: 10.10.2006
(51) Int. Cl.: C08K 5/3492, C08K 5/3432, C08L 23/06, C08L 23/10

(54) **Composition for stabilizing polyolefin polymers**

(30) Priority: 28.10.2005 IT mi20052067
(71) Applicant: 3V SIGMA S.p.A, I-20121 Milano (IT)
(72) Inventor: Maestri, Francesco, 24121 Bergamo (IT)
(74) Representative: Minoja, Fabrizio

(57) **Abstract**

Mixtures of stabilizing agents comprising 10% to 90% by weight of compound of formula (I) 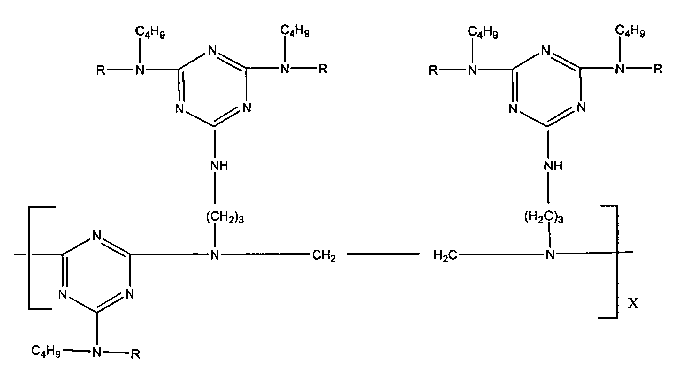 wherein R is: 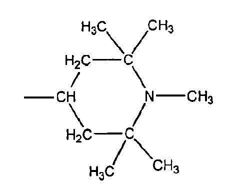 and x is an integer from 2 to 5,
with 90% to 10%, preferably 60% to 40% by weight, of at least one compound of formula (II) 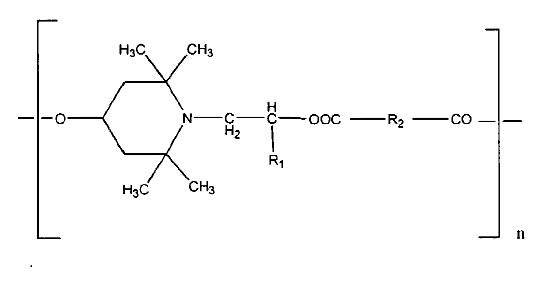 wherein R1 is hydrogen or methyl;
R2 is a direct bond or the C1-C10 alkylene group;
n is an integer from 2 to 50.

## Description

The present invention relates to compositions comprising one specific antiageing agent belonging to the class of sterically hindered amines with one or more other sterically hindered amines with high molecular weight and to the use thereof for stabilizing polyolefin polymers.

### TECHNOLOGICAL BACKGROUND

The use of compounds containing the polymethylpiperidine group, mainly 2,2,6,6-tetramethyl- or 1,2,2,6,6-pentamethylpiperidine, for the photostabilization of polymers is well known and to this end a wide literature exists.

Generally this class of stabilizing agents is divided into two groups, namely those having low molecular weight (up to 700) and those with high molecular weight (higher than 700).

A disclosure of some stabilizing agents of this class, the so called hindered amines (in the following HALS: Hindered Amines Light Stabilizers), of their different kinds and of their applicative characteristics is found in Gaechter-Mueller/Taschenbuch der Kunststoff-Additive, 2 Ausgabe 1983 pages 144-198.

In US Patents Nos. 4,692,486 and 5,021,485, some synergistic mixtures of derivatives of low and high molecular weight polyalkylpiperidine as photostabilizing agents for polymers are disclosed. US Patent No. US 4863981 discloses mixtures containing two different polymethylpiperidine high molecular derivatives photostabilizers for polymeric materials.

It has now been found that a novel, specific mixture of one HALS having 1,2,2,6,6-pentamethyl-piperidine structure with known HALS consisting of polyesters containing the 2,2,6,6-tetramethyl-piperidine moiety shows marked synergistic activity, as well as remarkable antioxidant effect in the stabilization of polyolefins, which is particularly useful with polyolefin films for covering greenhouses.

As used herein, "polyolefins" means ethylene polymers, propylene polymers and copolymers thereof.

### DISCLOSURE OF THE INVENTION

An object of the present invention are synergistic mixtures of stabilizing agents consisting of:
a) the compound of formula (I) 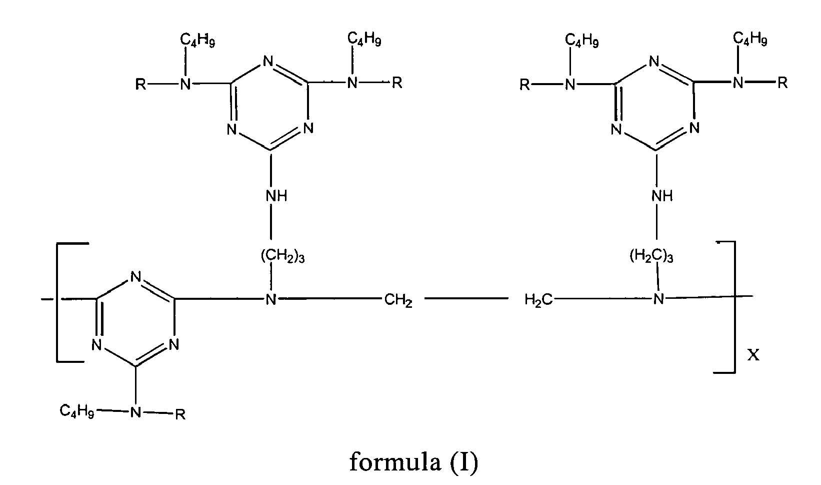 wherein R represents: 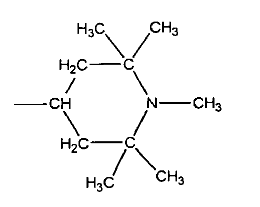 and x is an integer from 2 to 5,
b) with at least one compound of formula (II): 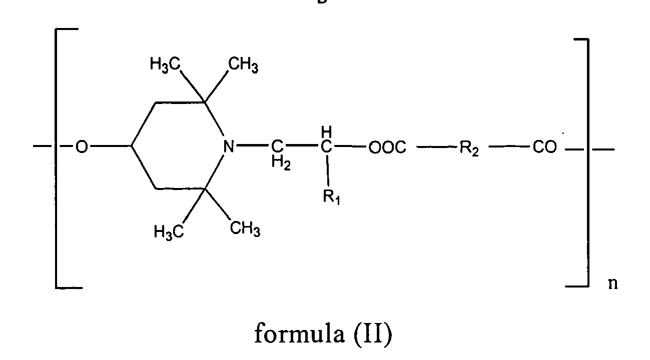
wherein R1 is hydrogen or methyl;
R2 is a direct bond or the C₁-C₁₀ alkylene group;
n is an integer from 2 to 50.

The compounds of formula (I) and (II) have been known for some time and processes for their preparation, as well as the uses thereof as stabilizing agents are described in US 4,477,615 and US 4,233,412.

Although it is evident that the above structural formulae represent the primary structure, being the compounds polymers, various types of oligomers can also be present in admixture with the primary structure.

According to a particularly preferred aspect, in formula (II) R1 is hydrogen and R2 is the C2 alkylene group.

The weight ratio of compound of formula (I) to total compounds of formula (II) can range from 10:90 to 90:10, preferably from 40:60 to 60:40.

The concentration of the stabilizing mixtures of the invention in the polyolefins can range from 0.01% to 5%, preferably from 0.05% to 2%, on the polymeric material weight. However, the stabilizing mixtures can be added to the polymers even in very high amounts, for example 5% to 50%, for the preparation of master batches.

The mixture of the stabilizing agents according to the present invention can also be prepared by *in situ* mixing, i.e. by addition of the separate ingredients to the polymer to be stabilized.

Incorporation in the polymer can be carried out according to various procedures; for example, by dry mixing the polymer with the stabilizing mixtures, or adding the latter to a suspension of the polymer in a suitable solvent and subsequently evaporating off the solvent. Finally, the polymeric material containing the stabilizing mixture is extruded and subjected to conventional treatments.

The stabilizing mixtures of the invention can also be used together with other additives commonly used in synthetic polymers technology, such as:
- antioxidants, such as those belonging to the classes of phenols, thioethers, phosphites and phosphonites;
- UV-absorbers, such as oxanilydes, benzotriazole and benzophenone derivatives;
- nickel complexes;
- metal deactivators, for example oxalic acid amides,
- plasticizers, antistatic agents, pigments, optical bleaching agents, flame retarders.

The following examples further illustrate the invention.

### Example 1

1000 parts by weight of low density polyethylene (M.F.I: 0.50 - 0.75), 0.3 parts by weight of paraffin oil, 0.3 parts by weight of n-octadecyl-3-(3,5-ditert-butyl-4-hydroxyphenyl)-propionate and 3 parts by weight of compound A, B or C, were mixed until homogenization; the resulting mixtures were extruded and blown at 190°C thereby obtaining a bubble film of approx. 80 µm thickness.

Specimens of these films were exposed to the UV radiations in a Weatherometer (WOM) Ci35A, with wet cycle 102/18' at a black panel temperature, during the dryness period, of 63 ± 2°C.

The photo-oxidative degradation was evaluated by periodically measuring the retained tensile strength compared with the starting one.

Table 1 below shows times, expressed as exposition hours in WOM Ci65, necessary to obtain a 50% decrease of the starting tensile strength (t₅₀):

**Table 1**

| **Stabilizer** | **t₅₀ (hrs)** |
|---|---|
| Compound A | 4500 |
| Compound B | 2700 |
| Compound C | 4750 |

| | |
|---|---|
| * Compound A: compound of formula (I) of the invention * Compound B: compound of formula (II) of the invention, in which R1 is hydrogen and R2 is the C2 alkylene group * Compound C: a 50:50 w/w mixture of compounds A and B | |

### Example 2

1000 Parts by weight of powder polypropylene homopolymer (with M.F.I: 10 - 12), 0.75 parts by weight of calcium stearate, 0.5 parts by weight of 1,3,5-tris-(3,5-diterbutyl-4-hydroxy-benzyl)-isocyanurate, 0.5 parts by weight of tris (2,4 of tert-butylphenyl) phosphite and 1.5 parts by weight of compound type A, B or D, were mixed to homogenization; the resulting mixtures were extruded at 260°C and transformed into multi-thread yam (480/60 dtex).

Specimens of this yarn were subjected to UV exposition test in a Weather-Ometer (WOM) Ci65, with dryness cycle and a black panel temperature of 63 ± 2°C.

The photo-oxidative degradation of the specimens was evaluated by periodically measuring the tensile strength compared with the starting one.

Table 2 below shows times, expressed as exposition hours in WOM Ci65, necessary to obtain a 50% decrease of the starting tensile strength (t₅₀):

**Table 2**

| **Stabilizing agent** | **t₅₀ hours** |
|---|---|
| Compound A | 1100 |
| Compound B | 750 |
| Compound D | 1200 |

| | |
|---|---|
| * Compound A: compound of formula (I) of the invention * Compound B: compound of formula (II) of the invention, in which R1 is hydrogen and R2 the C2 alkylene group * Compound D: 40:60 w/w mixture of compounds A and B. | |

### Example 3

1000 parts by weight of powdered polypropylene homopolymer (with M.F.I: 10 - 12), 0.75 parts by weight of calcium stearate, 0.5 parts by weight of 1,3,5-tris-(3,5-diterbutyl-4-hydroxy-benzyl)-isocyanurate, 0.5 parts by weight of tris (2,4 of tert-butylphenyl)phosphite and 3 parts by weight of compound type A, B or E, were mixed to homogenization; the resulting mixtures were extruded at 260°C and transformed into multi-thread yam (480/60 dtex).

Specimens of this yarn were subjected to thermal ageing test in a static dryer with forced air circulation at a temperature of 120°C. Thermal degradation of the specimens was evaluated by periodically measuring the tensile strength compared with the starting one.

Table 3 below shows times, expressed as exposition hours in a static dryer, necessary to obtain a 50% decrease of the starting tensile strength (t₅₀):

**Table 3**

| **Stabilizing agent** | **t₅₀ hours** |
|---|---|
| Compound A | 1200 |
| Compound B | 400. |
| Compound E | 1250 |

| | |
|---|---|
| * Compound A: compound of formula (I) of the invention * Compound B: compound of formula (II) of the invention, in which R1 is hydrogen and R2 is the C2 alkylene group * Compound E: 60:40 w/w mixture of compounds A and B. | |

## Claims

1. Mixtures of stabilizing agents comprising 10% to 90% by weight, preferably 40% to 60% by weight, of compound of formula (I) 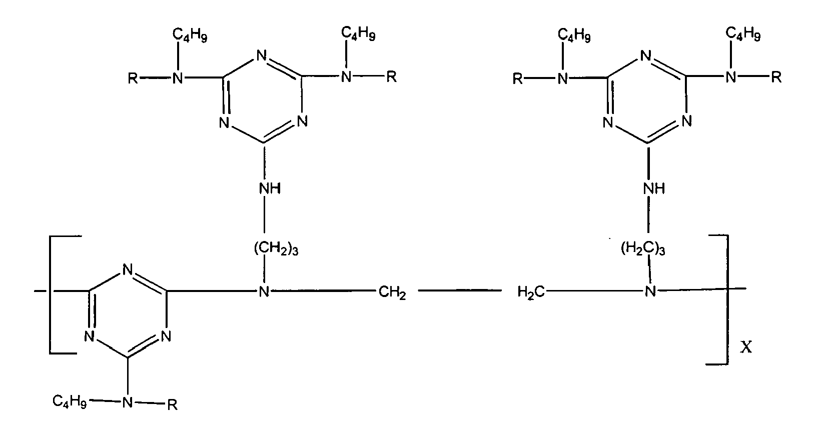 wherein R is: 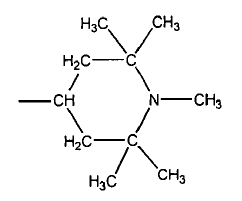 and x is an integer from 2 to 5,
with 90% to 10%, preferably 60% to 40% by weight, of at least one compound of formula (II) 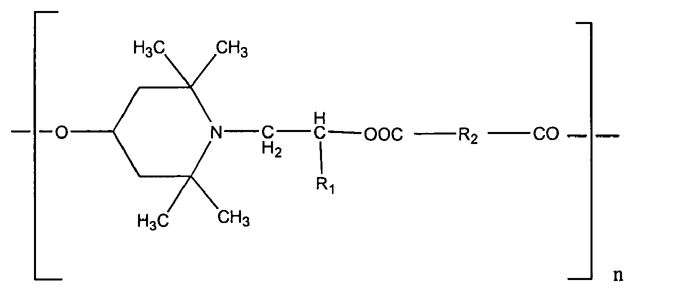 wherein R1 is hydrogen or methyl;
R2 is a direct bond or the C1-C10 alkylene group;
n is an integer from 2 to 50.

2. Mixtures of stabilizing agents as claimed in claim 1 wherein R1 is hydrogen and R2 is the C2 alkylene group.

3. Mixtures of stabilizing agents as claimed in claims 1 or 2 comprising 50% to 95% of a polyolefin on the total composition weight.

4. Polyolefins stabilized with 0.01% to 5%, preferably 0.05% to 2%, of a mixture of stabilizing agents as claimed in claims 1 or 2.
